# EUROPÄISCHE PATENTSCHRIFT

(11) **EP 0 389 766 B1**
(45) Veröffentlichungstag und Bekanntmachung des Hinweises auf die Patenterteilung: **24.03.1993**
(21) Anmeldenummer: 90102624.5
(22) Anmeldetag: 10.02.1990
(51) Int. Cl.: B60R 13/08

(54) **Kühlergrillblende zur Verminderung des direkten Schallaustrittes an einem Kfz**
Radiator screen for reducing the direct sound emission of a motor vehicle
Grille de radiateur pour réduire l'émission acoustique directe de voitures

(30) Priorität: 25.03.1989 DE 3909938; 25.11.1989 DE 3939111
(43) Veröffentlichungstag der Anmeldung: 03.10.1990
(73) Patentinhaber: MAN Nutzfahrzeuge Aktiengesellschaft, 80976 München (DE)
(72) Erfinder: Stiglmaier, Manfred, Dipl.-Ing., D-8031 Gilching (DE); Hörmann, Rudolf, D-8060 Dachau (DE); Drewitz, Hans, D-8000 München 40 (DE)

(56) Entgegenhaltungen:
- DE-A- 2 403 254
- DE-A- 2 449 574
- DE-A- 2 912 386
- DE-A- 3 402 731
- DE-A- 3 404 072
- US-A- 4 335 797

## Beschreibung

Die Erfindung bezieht sich auf ein Kraftfahrzeug, insbesondere Nutzfahrzeug, mit einer zwischen Kühler und Kühlergrill angeordneten Kühlergrillblende, die eine Vielzahl von Asorptionskanälen aufweist.

Es ist eine gattungsgemäße Vorrichtung nach der DE-A-2 912 386 mit stets gleichem Lufteintrittsquerschnitt bekannt.

Der Erfindung liegt die Aufgabe zugrunde, ein angepaßtes Kühlverhalten für unterschiedliche, auch extreme Einsatzbedingungen zu schaffen.

Dies wird dadurch erreicht, daß der Kühlergrill mit der Kühlergrillblende nach vorne ausfahrbar oder ausschwenkbar ausgebildet ist, wobei das Ausfahren über die Kühlwasseraustrittstemperatur des Verbrennungsmotors gesteuert ist. Solcherart kann man bei Lastkraftwagen mit besonders harten Einsatzbedingungen, wie z.B. Paßfahrten im Schleichtempo bei extrem hohen Außentemperaturen oder auch bei Tropeneinsatz einen zusätzlichen Lufteinlaßquerschnitt gewinnen, wobei die Steuerung der das Ausfahren des Kühlergrills mit Kühlergrillblende bewirkenden hydraulischen, pneumatischen oder elektrischen Einrichtung vorteilhafterweise über die Kühlwasser-Austrittstemperatur des Verbrennungsmotors erfolgen sollte, so daß eine Überhitzung desselben vermieden wird.

In weiterer Ausgestaltung ist der Kühlergrill mit der Kühlergrillblende nach vorne ausschwenkbar, z.B. mittels eines Pneumatik- oder Hydraulikzylinders, ausgebildet. Eine Schwenkbewegung hat gegenüber einer Geradführung den Vorteil, daß die ihr zuzuordnenden Bauteile billiger und weniger korrosionsanfällig sind.

Weiterhin kann die Erfindung dahingehend ausgestaltet sein, daß der Kühlergrill mit der Kühlergrillblende gegenüber der Frontwand des Kraftfahrzeuges vorgesetzt ist und an seinen Seitenwänden einen die Kühlergrillblende seitlich abdeckenden Rahmen aufweist. Solcherart ist die Kühlergrillblende gegen Stoß und Schlag geschützt, wie auch gegen das Eindringen von Feuchtigkeit.

Die Erfindung ist in mehreren Ausführungsbeispielen dargestellt.

Es zeigen:
- Fig. 1: eine Motorkühleinrichtung mit Geräuschdämpfung,
- Fig. 2: einen Absorptionskanal im Detail,
- Fig. 3: eine Variante des Absorptionskanals im Detail,
- Fig. 4: eine Variante der Motorkühleinrichtung mit Geräuschdämpfung,
- Fig. 5: eine Variante der Motorkühlvorrichtung mit Geräuschdämpfung.

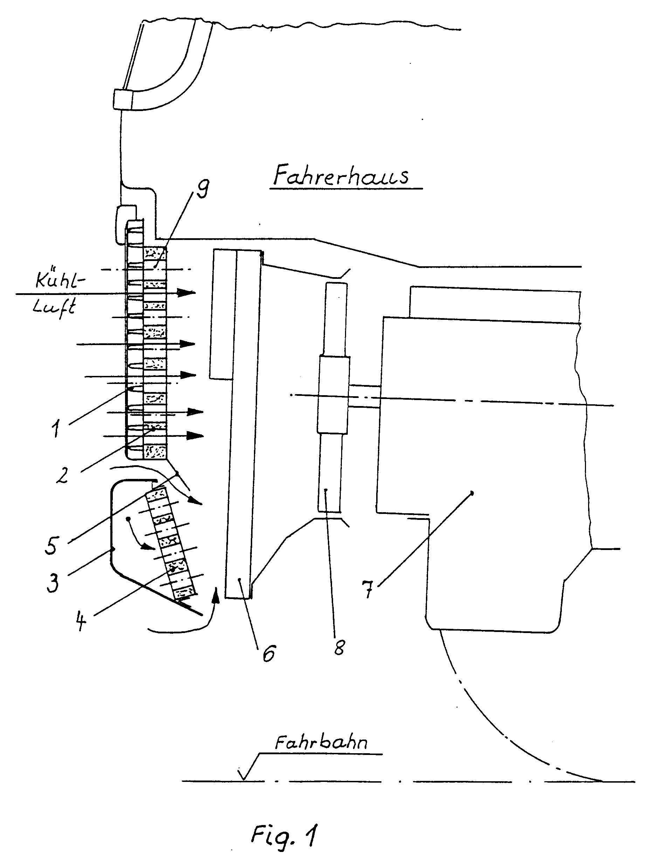

Fig. 1 zeigt eine unter dem Fahrerhaus eines Lkw's angeordnete Motorkühleinrichtung mit Geräuschdämpfung. Vor dem Verbrennungsmotor 7 liegt der Kühler 6 mit dem Lüfter 8. Mit der Vorderfront des Lkw's abschließend ist der Kühlergrill 1 angebracht und hinter diesem kühlerseits die Kühlergrillblende 2. Diese kann am Kühlergrill 1 und/oder an der Wartungsklappe der Frontwand befestigt sein. Wahlweise kann die Blende 2 auch über Halter mit dem Kühler 6 verbunden sein. Der Stoßfänger 5, der unter dem Kühlergrill 1 angeordnet ist, kann eine weitere, innenseitig des Stoßfängers 5 angebrachte Kühlergrillblende 4 aufweisen.

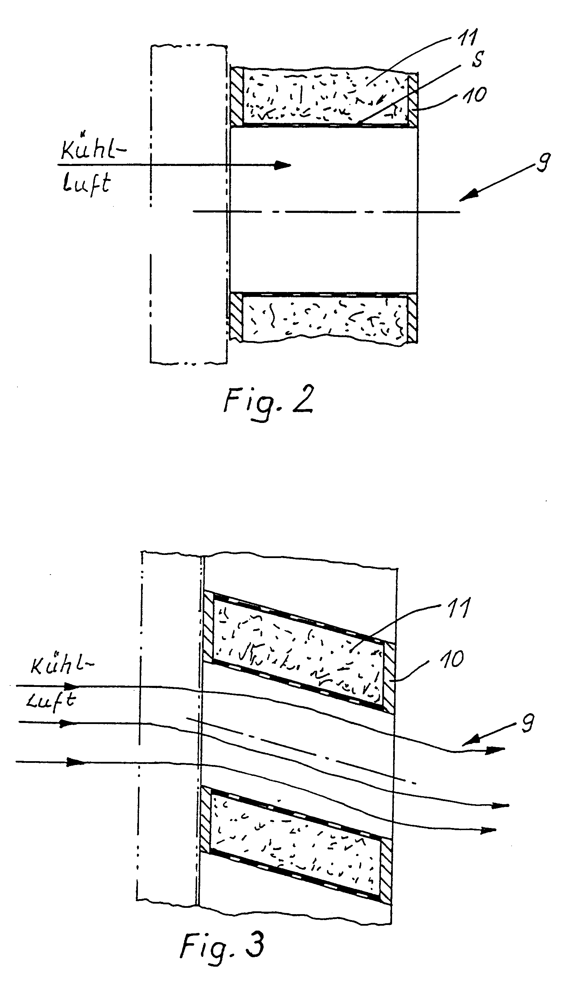

Die Figuren 2 und 3 zeigen Absorptionskanäle 9, wobei gemäß Fig. 3 die Absorptionskanäle schräg zum Kühllufteintritt verlaufen. Das Gerippe 10, z.B. aus Stahlblech oder Kunststoff gefertigt, weist Hohlräume auf, die mit einem schallabsorbierenden Mittel (11), z.B. Schaumstoff, aufgefüllt sind.

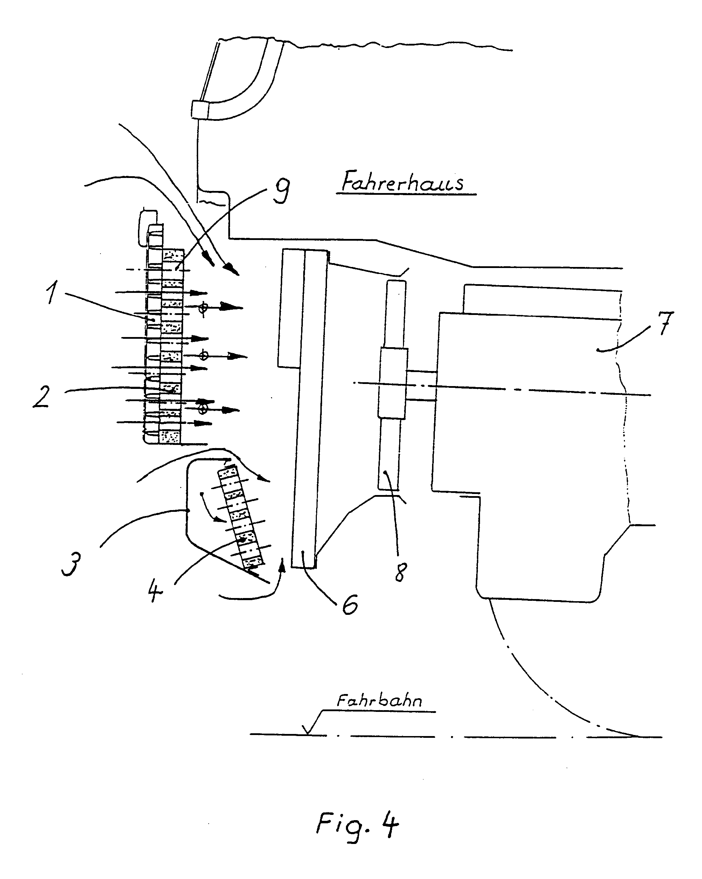

Fig. 4 zeigt eine Variante der Motorkühleinrichtung mit Geräuschdämpfung. Im Unterschied zu der Ausführung gemäß Fig. 1 - alle Einzelteile sind identisch - ist hier die Einheit Kühlergrill 1, Kühlergrillblende 2 aus der Position unter der Fahrerhausvorderwand um 10 bis 40 cm nach vorne ausfahrbar (Darstellung im ausgefahrenen Zustand), so daß ein zusätzlicher Lufteinlaßquerschnitt als Ringquerschnitt um das Kühlergrillgitter 1 mit Kühlergrillblende 2 entsteht. Auf diese Weise können auch besonders harte Einsatzbedingungen beherrscht werden, ohne daß der Motor Schaden leidet.

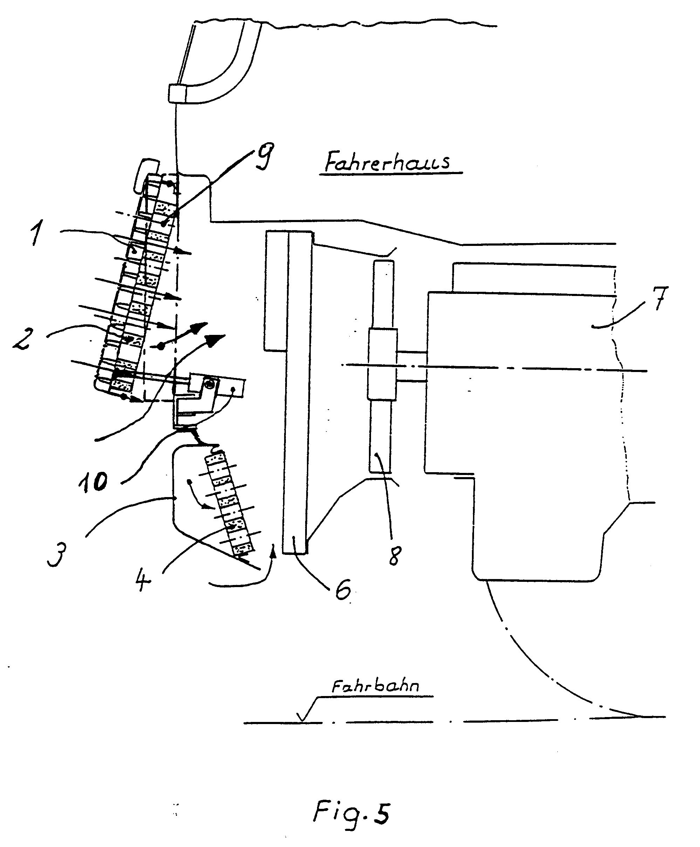

Nach Fig. 5 kann der Kühlergrill 1 mit der Kühlergrillblende 2 um einen an der Fahrerhaus-Vorderwand angeordneten Drehpunkt geschwenkt werden, z.B. mittels eines Pneumatik- oder Hydraulikzylinders 12, der einen Endes am Fahrerhaus und anderen Endes an der Kühlergrillblende befestigt ist. Die Kühlluft strömt dann bei ausgeschwenktem Kühlergrill mit Kühlergrillblende durch den unteren Spalt zum Kühler 6 hin. Die Kühlergrillblende 2 kann auch zum Schutz gegen Stoß und Schlag wie auch Feuchtigkeitseinfluß durch einen sie umgebenden an der Fahrerhausfrontwand befestigten Rahmen geschützt sein.

### Bezugszeichenliste

1 Kühlergrill
2 Kühlergrillblende
3 Stoßfänger
4 Kühlergrillblende an 3
5 Leitblech
6 Kühler
7 Motor
8 Lüfter
9 Absorptionskanäle
10 tragendes Teil
11 absorbierendes Teil
12 Hydraulik- oder Pneumatikzylinder

## Patentansprüche

1. Kraftfahrzeug, insbesondere Nutzfahrzeug, mit einer zwischen Kühler und Kühlergrill angeordneten Kühlergrillblende, die eine Vielzahl von Absorptionskanälen aufweist, dadurch gekennzeichnet, daß der Kühlergrill (1) mit der Kühlergrillblende (2) nach vorne ausfahrbar oder ausschwenkbar ausgebildet ist, wobei das Ausfahren über die Kühlwasseraustrittstemperatur des Verbrennungsmotors (7) gesteuert ist.

2. Kraftfahrzeug nach Anspruch 1, dadurch gekennzeichnet, daß das Ausfahren oder Ausschwenken des Kühlergrills (1) mit der Kühlergrillblende (2) mittels einer elektrischen, pneumatischen oder hydraulischen Einrichtung erfolgt.

3. Kraftfahrzeug nach Anspruch 1 oder 2, dadurch gekennzeichnet, daß die Kühlergrillblende (2) am Kühlergrill (1) und/oder an der Wartungsklappe der Frontwand befestigt ist.

4. Kraftfahrzeug nach den Ansprüchen 1 bis 3, dadurch gekennzeichnet, daß der Kühlergrill (1) mit der Kühlergrillblende (2) gegenüber der Frontwand des Kraftfahrzeuges vorgesetzt ist und an seinen Seitenwänden einen die Kühlergrillblende (2) seitlich abdeckenden Rahmen aufweist.

## Claims

1. Motor vehicles, in particular commercial vehicles, with a radiator grille blind containing a number of absorption channels fitted between radiator and radiator grille, characterised by the fact that the radiator grille (1) and the radiator grille blind (2) are designed in such a way that they can be moved forwards together or made to swing out, the process being controlled by the outlet temperature of the internal combustion engine (7) coolant.

2. Motor vehicles corresponding to claim 1, characterised by the fact that the radiator grille (1) and the radiator grille blind (2) are moved forwards or swing outwards by means of an electric, pneumatic or hydraulic device.

3. Motor vehicles corresponding to claim 1 or 2, characterised by the fact that the radiator grille blind (2) is fixed to the radiator grille (1) and/or to the maintenance flap on the front wall.

4. Motor vehicles corresponding to claims 1 to 3, characterised by the fact that the radiator grille (1) and radiator grille blind (2) are positioned forward of the front wall of the vehicle, the radiator grille (1) having on its side walls a frame which covers the sides of radiator grille blind (2).

## Revendications

1. Véhicule automobile, en particulier poids tourd, équipé, entre la grille de radiateur et le radiateur, d'un écran de grille présentant une multitude de canaux d'absorption, caractérisé en ce que l'ensemble de la grille de radiateur (1) et de son écran (2) peut être déplacé ou basculé vers l'avant, ce mouvement étant piloté en fonction de ta température de sortie de l'eau du radiateur.

2. Véhicule automobile selon la revendication 1, caractérisé en ce que l'avance ou le basculement de l'ensemble grille (1) plus écran de grille (2) est effectué par un dispositif électrique pneumatique ou hydraulique.

3. Véhicule selon la revendication 1 ou 2, caractérisé en ce que l'écran de grille (2) est fixé à la grille (1) et/ou à la trappe de visite de la façade avant de la cabine.

4. Véhicule selon les revendications 1 à 3, caractérisé en ce que l'ensemble de la grille de radiateur (1) et de son écran (2) est déplacé en avant de ta façade de la cabine de véhicule, un cadre recouvrant les parois latérales de l'écran de grille (2).
